# EUROPEAN PATENT SPECIFICATION

(11) **EP 3 589 031 B1**
(45) Date of publication and mention of the grant of the patent: **25.01.2023**
(21) Application number: 17897262.6
(22) Date of filing: 19.07.2017
(51) Int. Cl.: H04W 52/02

(54) **COMMUNICATION METHOD AND APPARATUS FOR WIRELESS LOCAL AREA NETWORK, AND COMMUNICATION TERMINAL**
KOMMUNIKATIONSVERFAHREN UND -VORRICHTUNG FÜR EIN DRAHTLOSES LOKALES NETZWERK UND KOMMUNIKATIONSENDGERÄT
PROCÉDÉ ET APPAREIL DE COMMUNICATION POUR RÉSEAU LOCAL SANS FIL, ET TERMINAL DE COMMUNICATION

(30) Priority: 24.02.2017 CN 201710103895
(43) Date of publication of application: 01.01.2020
(73) Proprietor: Meizu Technology Co., Ltd., Zhuhai, Guangdong 519085 (CN)
(72) Inventor: DONG, Xiandong, Zhuhai Guangdong 519085 (CN)
(74) Representative: DREISS Patentanwälte PartG mbB
(86) International application number: PCT/CN2017/093586
(87) International publication number: WO 2018/153013

(56) References cited:
- CN-A- 102 300 293
- CN-A- 104 160 757
- CN-A- 104 206 001
- CN-A- 105 101 343
- US-A1- 2009 310 618
- US-A1- 2014 112 226
- US-A1- 2014 177 501

## Description

### FIELD

The present disclosure relates to the technical field of communications, in particular to a communication method for a wireless local area network, a communication apparatus for a wireless local area network, and a communication terminal.

### BACKGROUND

In July 2016, 802.11 established a research group WUR (Wake up Receiver) of next generation Wi-Fi (Wireless Fidelity) technology, which was mainly used in the Internet of Things in order to save the power consumption of a device as much as possible.

A wake up frame is defined in the WUR research group, wherein a data frame receiver of a device may be in a sleep state, after a wake up frame receiver of the device receives a wake up frame, the data frame receiver will be woken up for normal communication (e.g., IEEE802.11 data communication, other signaling communication, etc.). Thus, the purpose of defining a wake up frame is to facilitate power consumption saving of the device.

In an existing Wi-Fi application scenario, there exists a large amount of management information. For example, an access point device (AP, i.e., Access Point) periodically sends a beacon frame to a work station device (Station), with TIM (Traffic Indication MAP) identification information written in the beacon frame, to periodically wake up the work station device to obtain downlink data cached in the access point device. Even if the work station device supports receiving the WUR frame to obtain the cached downlink data, it is still periodically woken up under the TIM mechanism, which undoubtedly results in unnecessary power loss and a low effective utilization rate of spectrum, and obviously does not meet the requirements of the WUR communication technology.

US 2014/112226 A1 refers to systems, methods, and devices for communicating data in a wireless communications network. US 2014/177501 A1 discloses a communication method based on a power save mode, performed by a station in a wireless local area network system. CN 104 160 757 A discloses a method and an apparatus for power savings in a wireless local area network.

### SUMMARY

Just based on at least one of the technical problems, the present disclosure proposes a communication technical solution for a wireless local area network, in which by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In view of this, according to an embodiment of a first aspect of the present disclosure, there is proposed a communication method for a wireless local area network according to claim 1.

In the related art, in order to reduce the standby power consumption of the station, when the standby time of the station reaches a preset time, the station enters the sleep state, and the AP caches the downlink data for the station. For the work station device that supports receiving a wake up frame, there are at least two mechanisms for obtaining the cached downlink data: for the first mechanism, the sleeping station periodically wakes up under the TIM mechanism, and sends an 802.11 data frame to the access point device to inquire whether there is cached data to be sent to the station, and even if there is no cached downlink data, the work station device will still wake up periodically for a meaningless inquiry operation; and for the second mechanism, the sleeping station can wake up according to instruction information of the wake up frame and obtain the cached downlink data. Obviously, the first mechanism is far inferior to the second mechanism in power consumption and reliability.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the above, the wake up frame is a wake up frame. The transmission power of the wake up frame is much lower than that of an IEEE802.11 data frame, the transmission power of the wake up frame is at most 1 mW (milliwatt), and the wake up frame can be a management frame.

In the above, a transmission port of the request frame is a primary communication interface, and transmission and reception ports of the wake up frame are secondary communication interfaces of the device. They may be a single physical entity, logically separated, or may be different physical entities, that is, the device has two receiving and transmitting means, wherein the communication interface may be an antenna or a transceiver.

Moreover, a receiver receiving the wake up frame and a receiver receiving the data frame (including the downlink data) may be a single physical entity, merely separated logically, whose operating state is controlled by different internal operation instructions. In addition, the receiver receiving the wake up frame and the receiver receiving the data frame may also be two physical entities, and there is a communication interface between the wake up frame receiver and the data frame receiver; and after receiving a wake up frame, the wake up frame receiver will send a wake up instruction to the data frame receiver via the communication interface to wake up the data frame receiver for communication.

It should be particularly noted that, in the communication method for a wireless local area network according to an embodiment of the present disclosure, for the work station device supporting receiving a wake up frame, the access point device is notified, by the identification information in the request frame, to turn off the TIM mechanism so as to avoid the power loss caused by the periodic wake-up of the work station device, and at the same time, the work station device can timely and accurately obtain the cached downlink data according to the wake up frame.

According to an embodiment of a second aspect of the present disclosure, there is proposed a communication method for a wireless local area network according to independent claim 2.

In this technical solution, by setting the TIM identification information in the generated management frame and setting the TIM identification information corresponding to the work station device supporting receiving a wake up frame to "0" or making no setting thereto, i.e., turning off the TIM mechanism for the work station device supporting receiving a wake up frame, the work station device in the sleep state obtains the cached downlink data only via the wake up frame, which effectively avoids the power loss and the data interaction pressure in the wireless local area network caused by the TIM mechanism.

In the above, a TIM unit has a length of 6-256 bytes, and carries the information indicating whether the station in the sleep state has a frame cached in the AP. In addition to the information ID and the length field, the unit further includes four fields: the number of DTIM, DTIM interval, indication map control, and partial virtual bitmap, detailed as follows:
The partial virtual bitmap is maintained by the AP that generates the TIM, and contains 2008 bits. The 2008 bits are organized into 251 bytes, the bit number N (0<N<2007) of these 2008 bits corresponds to the corresponding bit (the bit number is N modulo 8) in these bytes, among these bytes, the least significant bit is numbered 0, and the most significant bit is numbered 7. Each bit of the partial virtual bitmap corresponds to one station with downlink information cached in the AP.

In summary, if the station with the association number N has no data frame cached in the AP, the bit with the bit number N in the partial virtual bitmap is set to "0". If the AP is about to send any cached data frame, the bit corresponding to the station is set to "1".

In the technical solution, preferably, in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data; or when the one-bit field is "0", the identification information is used for instructing the work station device to support obtaining the cached downlink data according to either the wake up frame or the TIM mechanism; in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data; or when the two-bit field is "01", the identification information is used for instructing the work station device to obtain the cached downlink data according to the wake up frame in a first type communication period, and obtain the cached downlink data according to the TIM mechanism in a second type communication period, wherein the TIM mechanism is a communication mechanism by which the access point device broadcasts a beacon frame to the work station device, and the TIM mechanism is used for instructing the work station device to enter the awake state from the sleep state, and/or for instructing the work station device to time synchronize with the access point device.

In the technical solution, a MAC frame portion of the request frame includes at least one bit. For example, when the bit is set to "1", it means that the work station device supports receiving a wake up frame to receive the cached downlink data, without any necessity of using the TIM mechanism, and if the bit is set "0", it means that the device supports both the modes. If two bits are used, for example, setting the two bits to "00" indicates that the device supports receiving a wake up frame to receive the cached downlink data, without any necessity of using the TIM mechanism; and if the two bits are set to "01", it means that the device receives a wake up frame to receive the cached downlink data in a certain communication time, and receives a beacon frame to receive a cached downlink data frame in another communication time, with another purpose of receiving a timestamp information element in the beacon frame so as to time synchronize with the AP.

In the above, the station referred to may be a smart phone, a tablet or a PDA, and the AP may be a device such as a router or a laptop.

In the above, the beacon frame refers to a channel access mode operating in a MAC (Media Access Control) layer. In the beacon mode, a format of "superframe" is specified, at the beginning of the superframe, a beacon frame is sent, which contains some timing and network information, then comes a contention access period during which the nodes access a channel in a competitive manner, in a later stage, there comes a non-contention access period during which the nodes access the channel by using time division multiplexing, and finally there comes an inactive period during which the nodes enter the sleep state and wait for the start of the next superframe period to send a beacon frame.

The communication method for a wireless local area network according to the technical solution of the present disclosure may further have the following technical features:
In the technical solution, preferably, the method further comprises: generating a wake up frame upon the detection of the presence of cached downlink data; and sending the wake up frame to instruct the work station device in the sleep state to enter the awake state and receive the cached downlink data according to the wake up frame.

In this technical solution, by generating a wake up frame upon the detection of the presence of cached downlink data and sending the wake up frame to a corresponding work station device to instruct the work station device in the sleep state to enter the awake state and receive the cached downlink data according to the wake up frame, the work station device does not need to wake up periodically to inquire whether there is cached downlink data.

In the technical solution, preferably, the method further comprises: setting AID identification information in a management frame, the AID identification information being used for indicating connection information between the access point device and any associated work station device; and setting, upon the detection of the presence of cached downlink data, the AID identification information corresponding to the work station device to "1" to determine the work station device that waits to receive the downlink data.

In this technical solution, AID identification information is set in a management frame, the AID identification information is used for indicating connection information between the access point device and any associated work station device, and the AID identification information corresponding to the work station device is set to "1" upon the detection of the presence of cached downlink data, so as to determine the work station device that waits to receive the downlink data.

Specifically, the AID identification information is an identification number of the connection information allocated to the work station device by the access point device in the association accessing process, which has 16 identification bits in total, with the most significant two bits being 0.

In the technical solution, preferably, the method further comprises: receiving the request frame sent by the work station device; and parsing the request frame to obtain identification information, the identification information being used for instructing the work station device to support receiving a wake up frame.

In this technical solution, by receiving the request frame sent by the work station device and parsing the request frame to obtain identification information, it is possible to determine that the work station device supports receiving a wake up frame, and then modify the TIM identification information so as to turn off the TIM mechanism, which effectively avoids the periodic wake-up of the work station device, and reduces the power loss and the data interaction pressure of the communication channel caused by the TIM mechanism.

In any of the technical solutions, preferably, the request frame includes a probe request frame and/or an association request frame.

In this technical solution, when attempting to quickly locate an 802.11b wireless local area network, the station sends out a probe request frame, which can probe either a wireless local area network with an SSID (Service Set Identifier) or any wireless local area network. The probe request frame contains two information elements: SSID and supported communication rate, as shown in Table 1.1 below.

**Table 1.1**

| sequence | | field content |
|---|---|---|
| 1 | | SSID |
| 2 | supported communication rate | |

In addition, the association request frame is used when the station establishes an association relation with the BSS. The frame body of the association request frame contains 2 fixed fields: capability information and listen interval, and also contains 2 information elements: SSID and supported rate, as shown in Table 2.1.

**Table 2.1**

| sequence | | field content |
|---|---|---|
| 1 | | capability information |
| 2 | | listen interval |
| 3 | | SSID |
| 4 | supported communication rate | |

BSS (Basic Service Set) is composed of a group of work stations communicating with each other, which is a basic architecture of the 802.11 wireless local area network and mainly includes two types, i.e., IBSS and infrastructure networks. IBSS is also called ADHOC, the networking thereof is temporary, the first communication mode is Station-Station direct communication, which is not a concern here, and the second communication mode is that Station1 and Station2 are both associated with the AP and forward communication data via the AP.

In any of the technical solutions, preferably, the identification information is written in the request frame in the form of an information element.

In this technical solution, the information element is a field IE (Information Element) in an 802.11 management frame that does not have a fixed length, and the information element is used for being written in the identification information, in order to improve the accuracy and the scope of application of the identification information.

According to an embodiment of a third aspect of the present disclosure, there is proposed a communication apparatus for a wireless local area network according to independent claim 8.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the related art, in order to reduce the standby power consumption of the station, when the standby time of the station reaches a preset time, the station enters the sleep state, and the AP caches the downlink data for the station. For the work station device that supports receiving a wake up frame, there are at least two mechanisms for obtaining the cached downlink data: for the first mechanism, the sleeping station periodically wakes up under the TIM mechanism, and sends an 802.11 data frame to the access point device to inquire whether there is cached data to be sent to the station, and even if there is no cached downlink data, the work station device will still wake up periodically for a meaningless inquiry operation; and for the second mechanism, the sleeping station can wake up according to instruction information of the wake up frame and obtain the cached downlink data. Obviously, the first mechanism is far inferior to the second mechanism in power consumption and reliability.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the above, the wake up frame is a wake up frame. The transmission power of the wake up frame is much lower than that of an IEEE802.11 data frame, the transmission power of the wake up frame is about 1 mW (milliwatt), and the wake up frame can be a management frame.

In the above, a transmission port of the request frame is a primary communication interface, and transmission and reception ports of the wake up frame are secondary communication interfaces of the device. They may be a single physical entity, logically separated, or may be different physical entities, that is, the device has two receiving and transmitting means, wherein the communication interface may be an antenna or a transceiver.

Moreover, a receiver receiving the wake up frame and a receiver receiving the data frame (including the downlink data) may be a single physical entity, merely separated logically, whose operating state is controlled by different internal operation instructions. In addition, the receiver receiving the wake up frame and the receiver receiving the data frame may also be two physical entities, and there is a communication interface between the wake up frame receiver and the data frame receiver; and after receiving a wake up frame, the wake up frame receiver will send a wake up instruction to the data frame receiver via the communication interface to wake up the data frame receiver for communication.

It should be particularly noted that, in the communication method for a wireless local area network according to an embodiment of the present disclosure, for the work station device supporting receiving a wake up frame, the access point device is notified, by the identification information in the request frame, to turn off the TIM mechanism so as to avoid the power loss caused by the periodic wake-up of the work station device, and at the same time, the work station device can timely and accurately obtain the cached downlink data according to the wake up frame.

According to an embodiment of a fourth aspect of the present disclosure, there is proposed a communication apparatus for a wireless local area network according to independent claim 9.

In this technical solution, by setting the TIM identification information in the generated management frame and setting the TIM identification information corresponding to the work station device supporting receiving a wake up frame to "0" or making no setting thereto, i.e., turning off the TIM mechanism for the work station device supporting receiving a wake up frame, the work station device in the sleep state obtains the cached downlink data only via the wake up frame, which effectively avoids the power loss and the data interaction pressure in the wireless local area network caused by the TIM mechanism.

In the above, a TIM unit has a length of 6-256 bytes, and carries the information indicating whether the station in the sleep state has a frame cached in the AP. In addition to the information ID and the length field, the unit further includes four fields: the number of DTIM, DTIM interval, indication map control, and partial virtual bitmap, detailed as follows.

The partial virtual bitmap is maintained by the AP that generates the TIM, and contains 2008 bits. The 2008 bits are organized into 251 bytes, the bit number N (0<N<2007) of these 2008 bits corresponds to the corresponding bit (the bit number is N modulo 8) in these bytes, among these bytes, the least significant bit is numbered "0", and the most significant bit is numbered 7. Each bit of the partial virtual bitmap corresponds to one station with downlink information cached in the AP.

In summary, if the station with the association number N has no data frame cached in the AP, the bit with the bit number N in the partial virtual bitmap is set to "0". If the AP is about to send any cached data frame, the bit corresponding to the station is set to "1".

In the technical solution, preferably, in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data; or when the one-bit field is "0", the identification information is used for instructing the work station device to support obtaining the cached downlink data according to either the wake up frame or the TIM mechanism; in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data; or when the two-bit field is "01", the identification information is used for instructing the work station device to obtain the cached downlink data according to the wake up frame in a first type communication period, and obtain the cached downlink data according to the TIM mechanism in a second type communication period, wherein the TIM mechanism is a communication mechanism by which the access point device broadcasts a beacon frame to the work station device, and the TIM mechanism is used for instructing the work station device to enter the awake state from the sleep state, and/or for instructing the work station device to time synchronize with the access point device.

In the technical solution, a MAC frame portion of the request frame includes at least one bit. For example, when the bit is set to "1", it means that the work station device supports receiving a wake up frame to receive the cached downlink data, without any necessity of using the TIM mechanism, and if the bit is set "0", it means that the device supports both the modes. If two bits are used, for example, setting the two bits to "00" indicates that the device supports receiving a wake up frame to receive the cached downlink data, without any necessity of using the TIM mechanism; and if the two bits are set to "01", it means that the device receives a wake up frame to receive the cached downlink data in a certain communication time, and receives a beacon frame to receive a cached downlink data frame in another communication time, with another purpose of receiving a timestamp information element in the beacon frame so as to time synchronize with the AP.

In the above, the station referred to may be a smart phone, a tablet or a PDA, and the AP may be a device such as a router or a laptop.

In the above, the beacon frame refers to a channel access mode operating in a MAC (Media Access Control) layer. In the beacon mode, a format of "superframe" is specified, at the beginning of the superframe, a beacon frame is sent, which contains some timing and network information, then comes a contention access period during which the nodes access a channel in a competitive manner, in a later stage, there comes a non-contention access period during which the nodes access the channel by using time division multiplexing, and finally there comes an inactive period during which the nodes enter the sleep state and wait for the start of the next superframe period to send a beacon frame.

In the technical solution, preferably, the apparatus further comprises: a third generating unit for generating a wake up frame upon the detection of the presence of cached downlink data; and a third sending unit for sending the wake up frame to instruct the work station device in the sleep state to enter the awake state and receive the cached downlink data according to the wake up frame.

The communication apparatus for a wireless local area network according to the technical solution of the present disclosure may further have the following technical features:
In the technical solution, by generating a wake up frame upon the detection of the presence of cached downlink data and sending the wake up frame to a corresponding work station device to instruct the work station device in the sleep state to enter the awake state and receive the cached downlink data according to the wake up frame, the work station device does not need to wake up periodically to inquire whether there is cached downlink data.

In the technical solution, preferably, the apparatus further comprises: a setting unit for setting AID identification information in a management frame, the AID identification information being used for indicating connection information between the access point device and any associated work station device; and for setting, upon the detection of the presence of cached downlink data, the AID identification information corresponding to the work station device to "1" to determine the work station device that waits to receive the downlink data.

In this technical solution, AID identification information is set in a management frame, the AID identification information is used for indicating connection information between the access point device and any associated work station device, and the AID identification information corresponding to the work station device is set to "1" upon the detection of the presence of cached downlink data, so as to determine the work station device that waits to receive the downlink data.

Specifically, the AID identification information is an identification number of the connection information allocated to the work station device by the access point device in the association accessing process, which has 16 identification bits in total, with the most significant two bits being 0.

In the technical solution, preferably, the apparatus further comprises: a receiving unit for receiving the request frame sent by the work station device; and a parsing unit for parsing the request frame to obtain identification information, the identification information being used for instructing the work station device to support receiving a wake up frame.

In this technical solution, by receiving the request frame sent by the work station device and parsing the request frame to obtain identification information, it is possible to determine that the work station device supports receiving a wake up frame, and then modify the TIM identification information so as to turn off the TIM mechanism, which effectively avoids the periodic wake-up of the work station device, and reduces the power loss and the data interaction pressure of the communication channel caused by the TIM mechanism.

In any of the technical solutions, preferably, the request frame includes a probe request frame and/or an association request frame.

In this technical solution, when attempting to quickly locate an 802.11b wireless local area network, the station sends out a probe request frame, which can probe either a wireless local area network with an SSID (Service Set Identifier) or any wireless local area network. The probe request frame contains two information elements: SSID and supported communication rate, as shown in Table 2.1 below.

**Table 2.1**

| sequence | | field content |
|---|---|---|
| 1 | | SSID |
| 2 | supported communication rate | |

In addition, the association request frame is used when the station establishes an association relation with the BSS. The frame body of the association request frame contains 2 fixed fields: capability information and listen interval, and also contains 2 information elements: SSID and supported rate, as shown in Table 2.2.

**Table 2.2**

| sequence | | field content |
|---|---|---|
| 1 | | capability information |
| 2 | | listen interval |
| 3 | | SSID |
| 4 | supported communication rate | |

BSS (Basic Service Set) is composed of a group of work stations communicating with each other, which is a basic architecture of the 802.11 wireless local area network and mainly includes two types, i.e., IBSS and infrastructure networks. IBSS is also called ADHOC, the networking thereof is temporary, the first communication mode is Station-Station direct communication, which is not a concern here, and the second communication mode is that Station1 and Station2 are both associated with the AP and forward communication data via the AP.

In any of the technical solutions, preferably, the identification information is written in the request frame in the form of an information element.

In this technical solution, the information element is a field IE (Information Element) in an 802.11 management frame that does not have a fixed length, and the information element is used for being written in the identification information, in order to improve the accuracy and the scope of application of the identification information.

Additional aspects and advantages of the present disclosure will partly be set forth in the following description and will partly become apparent in the following description, or will be understood by implementing the present disclosure.

### BRIEF DESCRIPTION OF DRAWINGS

The above and/or additional aspects and advantages of the present disclosure will become apparent and readily understood from the following descriptions of embodiments in combination with the drawings, in which:
Fig. 1 is a schematic flowchart of a communication method for a wireless local area network according to an embodiment of the present disclosure;
Fig. 2 is a schematic flowchart of the communication method for a wireless local area network according to another embodiment of the present disclosure;
Fig. 3 is a schematic block diagram of a communication apparatus for a wireless local area network according to an embodiment of the present disclosure;
Fig. 4 is a schematic block diagram of the communication apparatus for a wireless local area network according to another embodiment of the present disclosure;
Fig. 5 is a schematic block diagram of a communication terminal according to an embodiment of the present disclosure;
Fig. 6 is a schematic diagram of a probe request frame of a communication solution for a wireless local area network according to an embodiment of the present disclosure; and
Fig. 7 is a schematic diagram of an association request frame of the communication solution
for a wireless local area network according to an embodiment of the present disclosure.

### DETAILED DESCRIPTION OF EMBODIMENTS

In order that the objectives, features and advantages of the present disclosure can be understood more clearly, a further detailed description of the present disclosure will be given below in combination with accompanying drawings and embodiments. It should be noted that the embodiments of the present disclosure and the features in the embodiments may be combined with each other without conflicts.

In the following description, numerous specific details are set forth in order to provide a thorough understanding of the present disclosure. However, the present disclosure can also be implemented in other manners different from those described herein. Therefore, the protection scope of the present disclosure is not limited to the specific embodiments disclosed below.

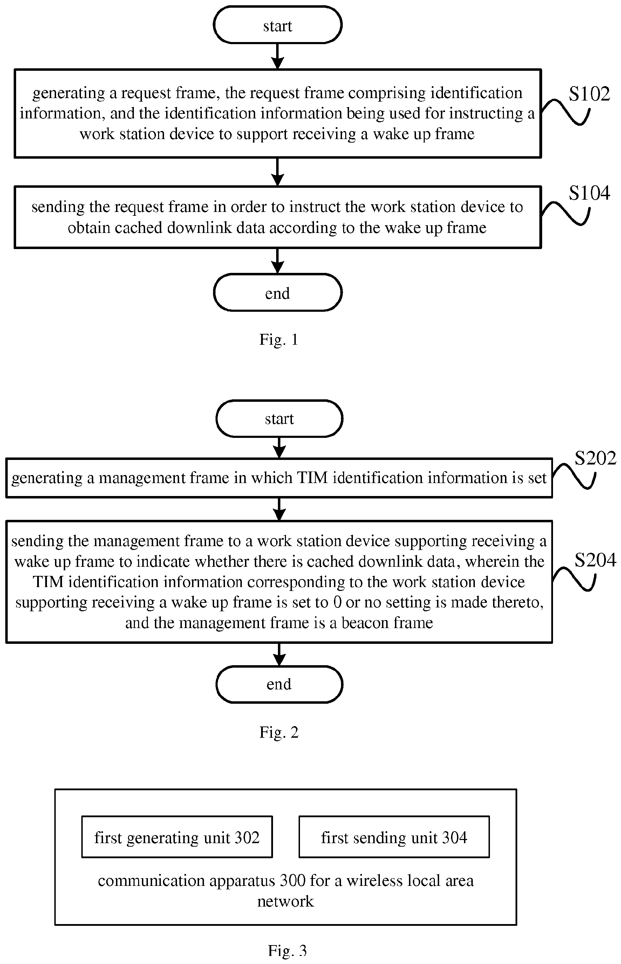

Fig. 1 is a schematic flowchart of a communication method for a wireless local area network according to an embodiment of the present disclosure.

As shown in Fig. 1, the communication method for a wireless local area network according to an embodiment of the present disclosure comprises: step S102, generating a request frame, the request frame comprising identification information, and the identification information being used for instructing a work station device to support receiving a wake up frame; and step S104, sending the request frame in order to instruct the work station device to obtain cached downlink data according to the wake up frame.

In the technical solution, in order to reduce the standby power consumption of the station, when the standby time of the station reaches a preset time, the station enters the sleep state, and the AP caches the downlink data for the station. For the work station device that supports receiving a wake up frame, there are at least two mechanisms for obtaining the cached downlink data: for the first mechanism, the sleeping station periodically wakes up under the TIM mechanism, and sends an 802.11 data frame to the access point device to inquire whether there is cached data to be sent to the station, and even if there is no cached downlink data, the work station device will still wake up periodically for a meaningless inquiry operation; and for the second mechanism, the sleeping station can wake up according to instruction information of the wake up frame and obtain the cached downlink data. Obviously, the first mechanism is far inferior to the second mechanism in power consumption and reliability.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the above, the wake up frame is a wake up frame. The transmission power of the wake up frame is much lower than that of an IEEE802.11 data frame, the transmission power of the wake up frame is at most 1 mW (milliwatt), and the wake up frame can be a management frame.

In the above, a transmission port of the request frame is a primary communication interface, and transmission and reception ports of the wake up frame are secondary communication interfaces of the device. They may be a single physical entity, logically separated, or may be different physical entities, that is, the device has two receiving and transmitting means, wherein the communication interface may be an antenna or a transceiver.

Moreover, a receiver receiving the wake up frame and a receiver receiving the data frame (including the downlink data) may be a single physical entity, merely separated logically, whose operating state is controlled by different internal operation instructions. In addition, the receiver receiving the wake up frame and the receiver receiving the data frame may also be two physical entities, and there is a communication interface between the wake up frame receiver and the data frame receiver; and after receiving a wake up frame, the wake up frame receiver will send a wake up instruction to the data frame receiver via the communication interface to wake up the data frame receiver for communication.

It should be particularly noted that, in the communication method for a wireless local area network according to an embodiment of the present disclosure, for the work station device supporting receiving a wake up frame, the access point device is notified, by the identification information in the request frame, to turn off the TIM mechanism so as to avoid the power loss caused by the periodic wake-up of the work station device, and at the same time, the work station device can timely and accurately obtain the cached downlink data according to the wake up frame.

Fig. 2 is a schematic flowchart of the communication method for a wireless local area network according to another embodiment of the present disclosure.

As shown in Fig. 2, according to an embodiment of the second aspect of the present disclosure, there is proposed a communication method for a wireless local area network, comprising: step S202, generating a management frame in which TIM identification information is set; and step S204, sending the management frame to a work station device supporting receiving a wake up frame to indicate whether there is cached downlink data, wherein the TIM identification information corresponding to the work station device supporting receiving a wake up frame is set to "0" or no setting is made thereto, and the management frame is a beacon frame.

In this technical solution, by setting the TIM identification information in the generated management frame and setting the TIM identification information corresponding to the work station device supporting receiving a wake up frame to "0" or making no setting thereto, i.e., turning off the TIM mechanism for the work station device supporting receiving a wake up frame, the work station device in the sleep state obtains the cached downlink data only via the wake up frame, which effectively avoids the power loss and the data interaction pressure in the wireless local area network caused by the TIM mechanism.

In the above, a TIM unit has a length of 6-256 bytes, and carries the information indicating whether the station in the sleep state has a frame cached in the AP. In addition to the information ID and the length field, the unit further includes four fields: the number of DTIM, DTIM interval, indication map control, and partial virtual bitmap, detailed as follows.

The partial virtual bitmap is maintained by the AP that generates the TIM, and contains 2008 bits. The 2008 bits are organized into 251 bytes, the bit number N (0<N<2007) of these 2008 bits corresponds to the corresponding bit (the bit number is N modulo 8) in these bytes, among these bytes, the least significant bit is numbered "0", and the most significant bit is numbered 7. Each bit of the partial virtual bitmap corresponds to one station with downlink information cached in the AP. In summary, if the station with the association number N has no data frame cached in the AP, the bit with the bit number N in the partial virtual bitmap is set to "0". If the AP is about to send any cached data frame, the bit corresponding to the station is set to "1".

In the technical solution, preferably, in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data; or when the one-bit field is "0", the identification information is used for instructing the work station device to support obtaining the cached downlink data according to either the wake up frame or the TIM mechanism; in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data; or when the two-bit field is "01", the identification information is used for instructing the work station device to obtain the cached downlink data according to the wake up frame in a first type communication period, and obtain the cached downlink data according to the TIM mechanism in a second type communication period, wherein the TIM mechanism is a communication mechanism by which the access point device broadcasts a beacon frame to the work station device, and the TIM mechanism is used for instructing the work station device to enter the awake state from the sleep state, and/or for instructing the work station device to time synchronize with the access point device.

In the technical solution, a MAC frame portion of the request frame includes at least one bit. For example, when the bit is set to "1", it means that the work station device supports receiving a wake up frame to receive the cached downlink data, without any necessity of using the TIM mechanism, and if the bit is set "0", it means that the device supports both the modes. If two bits are used, for example, setting the two bits to "00" indicates that the device supports receiving a wake up frame to receive the cached downlink data, without any necessity of using the TIM mechanism; and if the two bits are set to "01", it means that the device receives a wake up frame to receive the cached downlink data in a certain communication time, and receives a beacon frame to receive a cached downlink data frame in another communication time, with another purpose of receiving a timestamp information element in the beacon frame so as to time synchronize with the AP.

In the above, the station referred to may be a smart phone, a tablet or a PDA, and the AP may be a device such as a router or a laptop.

In the above, the beacon frame refers to a channel access mode operating in a MAC (Media Access Control) layer. In the beacon mode, a format of "superframe" is specified, at the beginning of the superframe, a beacon frame is sent, which contains some timing and network information, then comes a contention access period during which the nodes access a channel in a competitive manner, in a later stage, there comes a non-contention access period during which the nodes access the channel by using time division multiplexing, and finally there comes an inactive period during which the nodes enter the sleep state and wait for the start of the next superframe period to send a beacon frame.

The communication method for a wireless local area network according to the technical solution of the present disclosure may further have the following technical features.

In the technical solution, preferably, the method further comprises: generating a wake up frame upon the detection of the presence of cached downlink data; and sending the wake up frame to instruct the work station device in the sleep state to enter the awake state and receive the cached downlink data according to the wake up frame.

In this technical solution, by generating a wake up frame upon the detection of the presence of cached downlink data and sending the wake up frame to a corresponding work station device to instruct the work station device in the sleep state to enter the awake state and receive the cached downlink data according to the wake up frame, the work station device does not need to wake up periodically to inquire whether there is cached downlink data.

In the technical solution, preferably, the method further comprises: setting AID identification information in a management frame, the AID identification information being used for indicating connection information between the access point device and any associated work station device; and setting, upon the detection of the presence of cached downlink data, the AID identification information corresponding to the work station device to "1" to determine the work station device that waits to receive the downlink data.

In this technical solution, AID identification information is set in a management frame, the AID identification information is used for indicating connection information between the access point device and any associated work station device, and the AID identification information corresponding to the work station device is set to "1" upon the detection of the presence of cached downlink data, so as to determine the work station device that waits to receive the downlink data.

Specifically, the AID identification information is an identification number of the connection information allocated to the work station device by the access point device in the association accessing process, which has 16 identification bits in total, with the most significant two bits being "0".

In the technical solution, preferably, the method further comprises: receiving the request frame sent by the work station device; and parsing the request frame to obtain identification information, the identification information being used for instructing the work station device to support receiving a wake up frame.

In this technical solution, by receiving the request frame sent by the work station device and parsing the request frame to obtain identification information, it is possible to determine that the work station device supports receiving a wake up frame, and then modify the TIM identification information so as to turn off the TIM mechanism, which effectively avoids the periodic wake-up of the work station device, and reduces the power loss and the data interaction pressure of the communication channel caused by the TIM mechanism.

In any of the technical solutions, preferably, the request frame includes a probe request frame and/or an association request frame.

In this technical solution, when attempting to quickly locate an 802.11b wireless local area network, the station sends out a probe request frame, which can probe either a wireless local area network with an SSID (Service Set Identifier) or any wireless local area network. The probe request frame contains two information elements: SSID and supported communication rate, as shown in Table 3.1 below.

**Table 3.1**

| sequence | | field content |
|---|---|---|
| 1 | | SSID |
| 2 | supported communication rate | |

In addition, the association request frame is used when the station establishes an association relation with the BSS. The frame body of the association request frame contains 2 fixed fields: capability information and listen interval, and also contains 2 information elements: SSID and supported rate, as shown in Table 3.2.

**Table 3.2**

| sequence | | field content |
|---|---|---|
| 1 | | capability information |
| 2 | | listen interval |
| 3 | | SSID |
| 4 | supported communication rate | |

BSS (Basic Service Set) is composed of a group of work stations communicating with each other, which is a basic architecture of the 802.11 wireless local area network and mainly includes two types, i.e., IBSS and infrastructure networks. IBSS is also called ADHOC, the networking thereof is temporary, the first communication mode is Station-Station direct communication, which is not a concern here, and the second communication mode is that Station1 and Station2 are both associated with the AP and forward communication data via the AP.

In any of the technical solutions, preferably, the identification information is written in the request frame in the form of an information element.

In this technical solution, the information element is a field IE (Information Element) in an 802.11 management frame that does not have a fixed length, and the information element is used for being written in the identification information, in order to improve the accuracy and the scope of application of the identification information.

Fig. 3 is a schematic block diagram of a communication apparatus for a wireless local area network according to an embodiment of the present disclosure.

As shown in Fig. 3, according to an embodiment of the third aspect of the present disclosure, there is proposed a communication apparatus 300 for a wireless local area network, comprising: a first generating unit 302 for generating a request frame, the request frame comprising identification information, and the identification information being used for instructing a work station device to support receiving a wake up frame; and a first sending unit 304 for sending the request frame in order to instruct the work station device to obtain cached downlink data according to the wake up frame.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the related art, in order to reduce the standby power consumption of the station, when the standby time of the station reaches a preset time, the station enters the sleep state, and the AP caches the downlink data for the station. For the work station device that supports receiving a wake up frame, there are at least two mechanisms for obtaining the cached downlink data: for the first mechanism, the sleeping station periodically wakes up under the TIM mechanism, and sends an 802.11 data frame to the access point device to inquire whether there is cached data to be sent to the station, and even if there is no cached downlink data, the work station device will still wake up periodically for a meaningless inquiry operation; and for the second mechanism, the sleeping station can wake up according to instruction information of the wake up frame and obtain the cached downlink data. Obviously, the first mechanism is far inferior to the second mechanism in power consumption and reliability.

In this technical solution, by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device on the other hand.

In the above, the wake up frame is a wake up frame. The transmission power of the wake up frame is much lower than that of an IEEE802.11 data frame, the transmission power of the wake up frame is about 1 mW (milliwatt), and the wake up frame can be a management frame.

Moreover, a receiver receiving the wake up frame and a receiver receiving the data frame (including the downlink data) may be a single physical entity, merely separated logically, whose operating state is controlled by different internal operation instructions. In addition, the receiver receiving the wake up frame and the receiver receiving the data frame may also be two physical entities, and there is a communication interface between the wake up frame receiver and the data frame receiver; and after receiving a wake up frame, the wake up frame receiver will send a wake up instruction to the data frame receiver via the communication interface to wake up the data frame receiver for communication.

It should be particularly noted that, in the communication method for a wireless local area network according to an embodiment of the present disclosure, for the work station device supporting receiving a wake up frame, the access point device is notified, by the identification information in the request frame, to turn off the TIM mechanism so as to avoid the power loss caused by the periodic wake-up of the work station device, and at the same time, the work station device can timely and accurately obtain the cached downlink data according to the wake up frame.

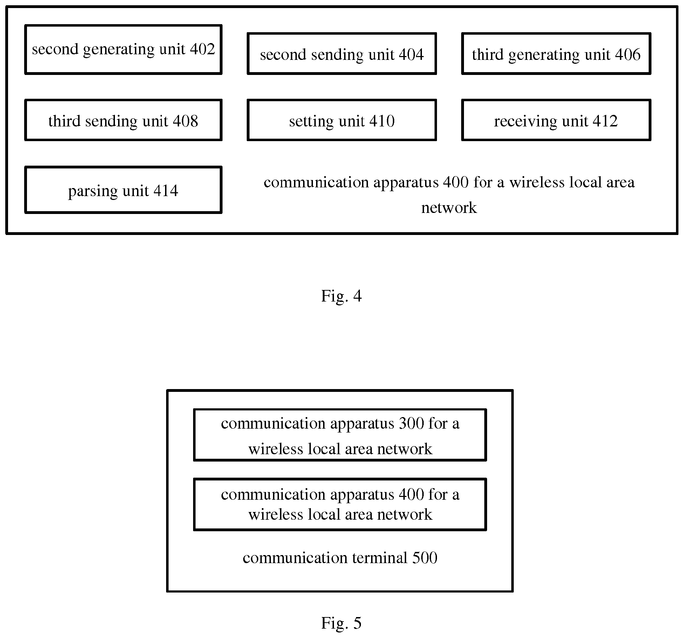

Fig. 4 is a schematic block diagram of the communication apparatus for a wireless local area network according to another embodiment of the present disclosure.

As shown in Fig. 4, according to an embodiment of the fourth aspect of the present disclosure, there is proposed a communication apparatus 400 for a wireless local area network, comprising: a second generating unit 402 for generating a management frame in which TIM identification information is set; and a second sending unit 404 for sending the management frame to a work station device supporting receiving a wake up frame to indicate whether there is cached downlink data, wherein the TIM identification information corresponding to the work station device supporting receiving a wake up frame is set to "0" or no setting is made thereto, and the management frame is a beacon frame.

In this technical solution, by setting the TIM identification information in the generated management frame and setting the TIM identification information corresponding to the work station device supporting receiving a wake up frame to "0" or making no setting thereto, i.e., turning off the TIM mechanism for the work station device supporting receiving a wake up frame, the work station device in the sleep state obtains the cached downlink data only via the wake up frame, which effectively avoids the power loss and the data interaction pressure in the wireless local area network caused by the TIM mechanism.

In the above, a TIM unit has a length of 6-256 bytes, and carries the information indicating whether the station in the sleep state has a frame cached in the AP. In addition to the information ID and the length field, the unit further includes four fields: the number of DTIM, DTIM interval, indication map control, and partial virtual bitmap, detailed as follows.

The partial virtual bitmap is maintained by the AP that generates the TIM, and contains 2008 bits. The 2008 bits are organized into 251 bytes, the bit number N (0<N<2007) of these 2008 bits corresponds to the corresponding bit (the bit number is N modulo 8) in these bytes, among these bytes, the least significant bit is numbered 0, and the most significant bit is numbered 7. Each bit of the partial virtual bitmap corresponds to one station with downlink information cached in the AP.

In summary, if the station with the association number N has no data frame cached in the AP, the bit with the bit number N in the partial virtual bitmap is set to "0". If the AP is about to send any cached data frame, the bit corresponding to the station is set to "1".

In the technical solution, preferably, in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data; or when the one-bit field is "0", the identification information is used for instructing the work station device to support obtaining the cached downlink data according to either the wake up frame or the TIM mechanism; in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data; or when the two-bit field is "01", the identification information is used for instructing the work station device to obtain the cached downlink data according to the wake up frame in a first type communication period, and obtain the cached downlink data according to the TIM mechanism in a second type communication period, wherein the TIM mechanism is a communication mechanism by which the access point device broadcasts a beacon frame to the work station device, and the TIM mechanism is used for instructing the work station device to enter the awake state from the sleep state, and/or for instructing the work station device to time synchronize with the access point device.

In the technical solution, a MAC frame portion of the request frame includes at least one bit. For example, when the bit is set to "1", it means that the work station device supports receiving a wake up frame to receive the cached downlink data, without any necessity of using the TIM mechanism, and if the bit is set "0", it means that the device supports both the modes. If two bits are used, for example, setting the two bits to "00" indicates that the device supports receiving a wake up frame to receive the cached downlink data, without any necessity of using the TIM mechanism; and if the two bits are set to "01", it means that the device receives a wake up frame to receive the cached downlink data in a certain communication time, and receives a beacon frame to receive a cached downlink data frame in another communication time, with another purpose of receiving a timestamp information element in the beacon frame so as to time synchronize with the AP.

In the above, the station referred to may be a smart phone, a tablet or a PDA, and the AP may be a device such as a router or a laptop.

In the above, the beacon frame refers to a channel access mode operating in a MAC (Media Access Control) layer. In the beacon mode, a format of "superframe" is specified, at the beginning of the superframe, a beacon frame is sent, which contains some timing and network information, then comes a contention access period during which the nodes access a channel in a competitive manner, in a later stage, there comes a non-contention access period during which the nodes access the channel by using time division multiplexing, and finally there comes an inactive period during which the nodes enter the sleep state and wait for the start of the next superframe period to send a beacon frame.

In the technical solution, preferably, the apparatus further comprises: a third generating unit 406 for generating a wake up frame upon the detection of the presence of cached downlink data; and a third sending unit 408 for sending the wake up frame to instruct the work station device in the sleep state to enter the awake state and receive the cached downlink data according to the wake up frame.

The communication apparatus 400 for a wireless local area network according to the technical solution of the present disclosure may further have the following technical features.

In the technical solution, by generating a wake up frame upon the detection of the presence of cached downlink data and sending the wake up frame to a corresponding work station device to instruct the work station device in the sleep state to enter the awake state and receive the cached downlink data according to the wake up frame, the work station device does not need to wake up periodically to inquire whether there is cached downlink data.

In the technical solution, preferably, the apparatus further comprises: a setting unit 410 for setting AID identification information in a management frame, the AID identification information being used for indicating connection information between the access point device and any associated work station device; and for setting, upon the detection of the presence of cached downlink data, the AID identification information corresponding to the work station device to "1" to determine the work station device that waits to receive the downlink data.

In this technical solution, AID identification information is set in a management frame, the AID identification information is used for indicating connection information between the access point device and any associated work station device, and the AID identification information corresponding to the work station device is set to "1" upon the detection of the presence of cached downlink data, so as to determine the work station device that waits to receive the downlink data.

Specifically, the AID identification information is an identification number of the connection information allocated to the work station device by the access point device in the association accessing process, which has 16 identification bits in total, with the most significant two bits being 0.

In the technical solution, preferably, the apparatus further comprises: a receiving unit 412 for receiving the request frame sent by the work station device; and a parsing unit 414 for parsing the request frame to obtain identification information, the identification information being used for instructing the work station device to support receiving a wake up frame.

In this technical solution, by receiving the request frame sent by the work station device and parsing the request frame to obtain identification information, it is possible to determine that the work station device supports receiving a wake up frame, and then modify the TIM identification information so as to turn off the TIM mechanism, which effectively avoids the periodic wake-up of the work station device, and reduces the power loss and the data interaction pressure of the communication channel caused by the TIM mechanism.

In any of the technical solutions, preferably, the request frame includes a probe request frame and/or an association request frame.

In this technical solution, when attempting to quickly locate an 802.11b wireless local area network, the station sends out a probe request frame, which can probe either a wireless local area network with an SSID (Service Set Identifier) or any wireless local area network. The probe request frame contains two information elements: SSID and supported communication rate, as shown in Table 4.1 below.

**Table 4.1**

| sequence | | field content |
|---|---|---|
| 1 | | SSID |
| 2 | supported communication rate | |

In addition, the association request frame is used when the station establishes an association relation with the BSS. The frame body of the association request frame contains 2 fixed fields: capability information and listen interval, and also contains 2 information elements: SSID and supported rate, as shown in Table 4.2.

**Table 4.2**

| sequence | | field content |
|---|---|---|
| 1 | | capability information |
| 2 | | listen interval |
| 3 | | SSID |
| 4 | supported communication rate | |

BSS (Basic Service Set) is composed of a group of work stations communicating with each other, which is a basic architecture of the 802.11 wireless local area network and mainly includes two types, i.e., IBSS and infrastructure networks. IBSS is also called ADHOC, the networking thereof is temporary, the first communication mode is Station-Station direct communication, which is not a concern here, and the second communication mode is that Station1 and Station 2 are both associated with the AP and forward communication data via the AP.

In any of the technical solutions, preferably, the identification information is written in the request frame in the form of an information element.

In this technical solution, the information element is a field IE (Information Element) in an 802.11 management frame that does not have a fixed length, and the information element is used for being written in the identification information, in order to improve the accuracy and the scope of application of the identification information.

Fig. 5 is a schematic block diagram of a communication terminal according to an embodiment of the present disclosure.

As shown in Fig. 5, the communication terminal 500 according to an embodiment of the present disclosure comprises the communication apparatus 300 for a wireless local area network as shown in Fig. 3 and/or the communication apparatus 400 for a wireless local area network as shown in Fig. 4, and therefore, the communication terminal 500 has all the technical effects of the communication apparatus 300 for a wireless local area network and/or the communication apparatus 400 for a wireless local area network as set forth in the fourth aspect.

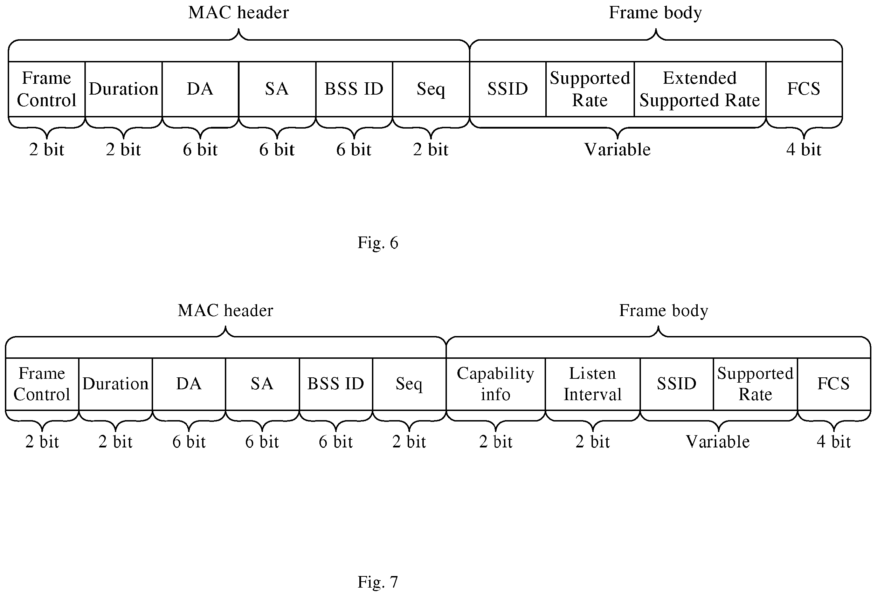

Fig. 6 is a schematic diagram of a probe request frame of a communication solution for a wireless local area network according to an embodiment of the present disclosure.

Fig. 7 is a schematic diagram of an association request frame of the communication solution for a wireless local area network according to an embodiment of the present disclosure.

The request frame of the communication solution for a wireless local area network according to an embodiment of the present disclosure is specifically described below with reference to Figs. 6 and 7.

The request frame shown in Fig. 6 is a probe request frame, which specifically includes:
6.1 A frame header (Mac header) includes:
   Frame Control: The frame control structure includes a protocol version and frame type information;
   Duration: It indicates how long the frame and its acknowledgement frame will occupy the channel, and the value of Duration is used for network allocation vector (NAV) calculation;
   DA: The field contains a MAC single address or group address and is used for indicating the final receiver of the MSDU contained in the frame, the reason why this field is not with the RA field is indirect frame transmission of the DS;
   SA: The field contains a single MAC address and is used for indicating the station address in the frame body that initiates the transmission of the MSDU, in the field, the I/O bit is set to "0", this field is not always consistent with the TA field, as this field can be used to accomplish indirect frame transmission in the DS system of 802.11bWLAN, in the high layer protocols, this field represents the source address of the frame;
   BSS ID: It is used to identify a BSS and has a format that is the same as the MAC address, which is a 48-bit address format. In general, it is the MAC address of the wireless access point in which it is located, in a way, it works like an SSID, but the SSID is the name of a network and is for people, while the BSSID is for machines, and the BSSID is like a MAC address; and
   Seq (abbreviation for Sequence Control): It is used for filtering duplicated frames.
6.2 A frame body identifies the transmitted or received information, is not limited in the number of bits, and includes:
   SSID: Service Set Identifier it is a string formed by bytes and is used to identify the BSSID of the network to which it belongs, that is, the name of the access point we saw before Wi-Fi connection;
   Supported Rate: A wireless local area network supports several standard rates, when a mobile work station attempts to join a network, it will first inspect the data rate used by the network, and some rates are mandatory and are the rates that each work station must support;
   Extended Supported Rate; and
   FCS: It includes a 32-bit Cyclic Redundancy Check (CRC) and is used for error detection (it should be noted that it is used for error detection rather than error correction).

The request frame shown in Fig. 7 is an association request frame (Association Request), which specifically includes:
7.1 A frame header (Mac header) includes:
   Frame Control: The frame control structure includes a protocol version and frame type information;
   Duration: It indicates how long the frame and its acknowledgement frame will occupy the channel, and the value of Duration is used for network allocation vector (NAV) calculation;
   DA: The field contains a MAC single address or group address and is used for indicating the final receiver of the MSDU contained in the frame, the reason why this field is not with the RA field is indirect frame transmission of the DS;
   SA: The field contains a single MAC address and is used for indicating the station address in the frame body that initiates the transmission of the MSDU, in the field, the I/O bit is set to "0", this field is not always consistent with the TA field, as this field can be used to accomplish indirect frame transmission in the DS system of 802.11bWLAN, in the high layer protocols, this field represents the source address of the frame;
   BSS ID: It is used to identify a BSS and has a format that is the same as the MAC address, which is a 48-bit address format, in general, it is the MAC address of the wireless access point in which it is located, in a way, it works like an SSID, but the SSID is the name of a network and is for people, while the BSSID is for machines, and the BSSID is like a MAC address; and
   Seq (abbreviation for Sequence Control): It is used for filtering duplicated frames.
7.2 A frame body includes:
   Capability info (abbreviation for Capability information): At the time of sending a beacon signal, capability info is used to notify each party what capabilities the network has;
   Listen Interval: In order to save battery power, the work station can temporarily turn off the antenna of the 802.11 network interface, and when the work station is in the sleep state, the access point must temporarily store frames for it;
   SSID: Service Set Identifier, it is a string formed by bytes and is used to identify the BSSID of the network to which it belongs, that is, the name of the access point we saw before Wi-Fi connection;
   Supported Rate: A wireless local area network supports several standard rates, when a mobile work station attempts to join a network, it will first inspect the data rate used by the network, and some rates are mandatory and are the rates that each work station must support;
   FCS: It includes a 32-bit Cyclic Redundancy Check (CRC) and is used for error detection (it should be noted that it is used for error detection rather than error correction).

In the process in which the work station device sends the above-described request frames to be associated with the access point device, a valid information element is also carried therein, and in the present disclosure, in order to reduce the power loss of the work station device supporting the wake up frame, the TIM identification information is modified in the form of an information element, thereby turning off the TIM mechanism of the work station device, and also reducing the data interaction pressure of the wireless local area network.

The steps of the method in the embodiment of the present disclosure may be adjusted in order, combined, deleted or reduced according to actual needs.

The units of the terminal in the embodiment of the present disclosure can be combined, divided, deleted or reduced according to actual needs.

A person of ordinary skills in the art would appreciate that all or some of the steps of the various methods of the embodiments may be accomplished by a program instructing related hardware, wherein the program may be stored in a computer-readable storage medium, the storage medium including a read-only memory (ROM), a random access memory (RAM), a programmable read-only memory (PROM), an erasable programmable read only memory (EPROM), a one-time programmable read-only memory (OTPROM), an electrically-erasable programmable read-only memory (EEPROM), a compact disc read-only memory (CD-ROM), or other optical disk memories, magnetic disk memories, magnetic tape memories, or any other mediums readable by a computer that can be used to carry or store data.

The technical solutions of the present disclosure have been described above in detail with reference to the accompanying drawings. In view of the problems of power consumption and poor spectrum efficiency of communication devices in a wireless local area network that have been proposed in the related art, the present disclosure proposes a communication solution for a wireless local area network, in which by comprising identification information in a request frame, a work station device may be instructed, in the process of being associated to and accessing an access point device, to support receiving a wake up frame, that is, in order to reduce power loss, the work station device in a sleep state enters an awake state only when receiving the wake up frame, and then receives cached downlink data according to the wake up frame, which reduces the power loss caused by periodic wake-up of the work station device on the one hand, and improves the timeliness and reliability of obtaining downlink data by the work station device and enhances the spectrum efficiency of the wireless local area network on the other hand.

## Claims

1. A communication method for a wireless local area network, applicable to a work station device, comprising:
generating a request frame, the request frame comprising identification information, and the identification information being used for instructing the work station device to support receiving a wake up frame (S 102);
sending the request frame in order to instruct an access point device to obtain cached downlink data according to the wake up frame (S104), wherein the access point is supporting sending a wake up frame to indicate whether there is cached downlink data; and
receiving a management frame in which Traffic Indication Map, TIM, identification information is set,
wherein the TIM identification information corresponding to the work station device supporting receiving a wake up frame is set to "0" or no setting is made thereto, and the management frame is a beacon frame.

2. A communication method for a wireless local area network, applicable to an access point device, wherein the communication method for a wireless local area network comprises:
receiving a request frame, the request frame comprising identification information, and the identification information being used for instructing the work station device to support receiving a wake up frame in order to instruct the work station device to obtain cached downlink data according to the wake up frame;
generating a management frame in which Traffic Indication Map, TIM, identification information is set (S202); and
sending the management frame to a work station device supporting receiving a wake up frame to indicate whether there is cached downlink data (S204),
wherein the TIM identification information corresponding to the work station device supporting receiving a wake up frame is set to "0" or no setting is made thereto, and the management frame is a beacon frame.

3. The communication method for a wireless local area network according to claim 2, further comprising:
generating a wake up frame upon the detection of the presence of cached downlink data; and
sending the wake up frame to instruct the work station device in the sleep state to enter the awake state and receive the cached downlink data according to the wake up frame.

4. The communication method for a wireless local area network according to claim 2, further comprising:
setting AID identification information in the management frame, the AID identification information being used for indicating connection information between the access point device and any associated work station device; and
setting, upon the detection of the presence of cached downlink data, the AID identification information corresponding to the work station device to "1" to determine the work station device that waits to receive the downlink data, and
sending the management frame to the work station device.

5. The communication method for a wireless local area network according to claim 2, further comprising:
receiving the request frame sent by the work station device; and
parsing the request frame to obtain identification information, the identification information being used for instructing the work station device to support receiving a wake up frame.

6. The communication method for a wireless local area network according to any of claims 1-5, wherein,
the request frame includes a probe request frame and/or an association request frame,
the identification information is written in the request frame in the form of an information element.

7. The communication method for a wireless local area network according to any of claims 1-5, wherein,
in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data;
or when the one-bit field is "0", the identification information is used for instructing the work station device to support obtaining the cached downlink data according to either the wake up frame or the TIM mechanism;
in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data;
or when the two-bit field is "01", the identification information is used for instructing the work station device to obtain the cached downlink data according to the wake up frame in a first type communication period, and obtain the cached downlink data according to the TIM mechanism in a second type communication period,
wherein the TIM mechanism is a communication mode in which the access point device broadcasts a beacon frame to the work station device, and the TIM mechanism is used for instructing the work station device to enter the awake state from the sleep state, and/or for instructing the work station device to time synchronize with the access point device.

8. A communication apparatus (300) for a wireless local area network, applicable to a work station device, comprising:
a first generating unit (302) for generating a request frame, the request frame comprising identification information, and the identification information being used for instructing the work station device to support receiving a wake up frame;
a first sending unit (304) for sending the request frame in order to instruct an access point device to obtain cached downlink data according to the wake up frame;
a receiving unit for receiving a management frame in which Traffic Indication Map, TIM, identification information is set, wherein the management frame is received from the access point device supporting sending a wake up frame to indicate whether there is cached downlink data,
wherein the TIM identification information corresponding to the work station device supporting receiving a wake up frame is set to "0" or no setting is made thereto, and the management frame is a beacon frame.

9. A communication apparatus (400) for a wireless local area network, applicable to an access point device, wherein the communication apparatus (400) for a wireless local area network comprises:
a receiving unit for receiving
a request frame, the request frame comprising identification information, and the identification information being used for instructing a work station device to support receiving a wake up frame in order to instruct the work station device to obtain cached downlink data according to the wake up frame;
a second generating unit (402) for generating a management frame in which Traffic Indication Map, TIM, identification information is set; and
a second sending unit (404) for sending the management frame to the work station device supporting receiving a wake up frame to indicate whether there is cached downlink data,
wherein the TIM identification information corresponding to the work station device supporting receiving a wake up frame is set to "0" or no setting is made thereto, and the management frame is a beacon frame.

10. The communication apparatus (400) for a wireless local area network according to claim 9, further comprising:
a third generating unit (406) for generating a wake up frame upon the detection of the presence of cached downlink data; and
a third sending unit (408) for sending the wake up frame to instruct the work station device in the sleep state to enter the awake state and receive the cached downlink data according to the wake up frame.

11. The communication apparatus (400) for a wireless local area network according to claim 9, further comprising:
a setting unit (410) for setting AID identification information in the
management frame, the AID identification information being used for indicating connection information between the access point device and any associated work station device; and
the setting unit (410) being further used for setting, upon the detection of the presence of cached downlink data, the AID identification information corresponding to the work station device to "1" to determine the work station device that waits to receive the downlink data.

12. The communication apparatus (400) for a wireless local area network according to claim 9, further comprising:
a receiving unit (412) for receiving the request frame sent by the work station device; and
a parsing unit (414) for parsing the request frame to obtain identification information, the identification information being used for instructing the work station device to support receiving a wake up frame.

13. The communication apparatus (300, 400) for a wireless local area network according to any of claims 8-12, wherein,
the request frame includes a probe request frame and/or an association request frame,
the identification information is written in the request frame in the form of an information element.

14. The communication apparatus (300, 400) for a wireless local area network according to any of claims 8-12, wherein,
in the case where the identification information is a one-bit field in the frame header of the request frame, when the one-bit field is "1", the identification information is used for instructing the work station device to receive the cached downlink data according to the wake up frame, and disable the TIM mechanism to obtain the cached downlink data;
or when the one-bit field is "0", the identification information is used for instructing the work station device to support obtaining the cached downlink data according to either the wake up frame or the TIM mechanism;
in the case where the identification information is a two-bit field in the frame header of the request frame, when the two-bit field is "00", the identification information is used for instructing the work station device to receive the cached downlink data according to the wake up frame, and disable the TIM mechanism to obtain the cached downlink data;
or when the two-bit field is "01", the identification information is used for instructing the work station device to obtain the cached downlink data according to the wake up frame in a first type communication period, and obtain the cached downlink data according to the TIM mechanism in a second type communication period,
wherein the TIM mechanism is a communication mechanism by which the access point device broadcasts a beacon frame to the work station device, and the TIM mechanism is used for instructing the work station device to enter the awake state from the sleep state, and/or for instructing the work station device to time synchronize with the access point device.

## Patentansprüche

1. Kommunikationsverfahren für ein drahtloses lokales Netz, das für eine Workstation-Vorrichtung anwendbar ist, umfassend:
Erzeugen eines Request-Frame, welcher Request-Frame Identifizierungsinformationen umfasst, wobei der Request-Frame dafür verwendet wird, die Workstation-Vorrichtung anzuweisen, das Empfangen eines Wake-up-Frame (S102) zu unterstützen;
Senden des Request-Frame, um eine Zugriffspunktvorrichtung anzuweisen, gecachte Downlink-Daten gemäß dem Wake-up-Frame zu erhalten (S104), wobei der Zugriffspunkt das Senden eines Wake-up-Frame unterstützt, um anzuzeigen, ob gecachte Downlink-Daten vorhanden sind; und
Empfangen eines Management-Frame, in welchem Traffic Indication Map (TIM) Identifizierungsinformationen hinterlegt sind,
wobei die der Workstation-Vorrichtung entsprechenden TIM-Identifizierungsinformationen, die das Empfangen eines Wake-up-Frame unterstützen, auf "0" gesetzt sind oder an diesen keine Einstellung vorgenommen wird, und der Management-Frame ein Beacon-Frame ist.

2. Kommunikationsverfahren für ein drahtloses lokales Netz, das für eine Zugriffspunktvorrichtung anwendbar ist, wobei das Kommunikationsverfahren für ein drahtloses lokales Netz umfasst:
Empfangen eines Request-Frame, welcher Request-Frame Identifizierungsinformationen umfasst, wobei die Identifizierungsinformationen dafür verwendet werden, die Workstation-Vorrichtung anzuweisen, das Empfangen eines Wake-up-Frame zu unterstützen, um die Workstation-Vorrichtung anzuweisen, gecachte Downlink-Daten gemäß dem Wake-up-Frame zu erhalten;
Erzeugen eines Management-Frame, in welchem Traffic Indication Map (TIM) Identifizierungsinformationen hinterlegt sind (S202), und
Senden des Management-Frame an eine Workstation-Vorrichtung, die das Empfangen eines Wake-up-Frame unterstützt, um anzuzeigen, ob gecachte Downlink-Daten vorhanden sind (S204),
wobei die TIM-Identifizierungsinformationen, die der Workstation-Vorrichtung entsprechen, die das Empfangen eines Wake-up-Frame unterstützt, auf "0" gesetzt sind oder an diesen keine Einstellung vorgenommen wird, und der Management-Frame ein Beacon-Frame ist.

3. Kommunikationsverfahren für ein drahtloses lokales Netz nach Anspruch 2, ferner umfassend:
Erzeugen eines Wake-up-Frame auf das Erfassen des Vorhandenseins von gecachten Downlink-Daten hin; und
Senden des Wake-up-Frame, um die Workstation-Vorrichtung im Ruhezustand anzuweisen, in den aktiven Zustand einzutreten und die gecachten Downlink-Daten gemäß dem Wake-up-Frame zu empfangen.

4. Kommunikationsverfahren für ein drahtloses lokales Netz nach Anspruch 2, ferner umfassend:
Einstellen von AID-Identifizierungsinformationen in dem Management-Frame, wobei die AID-Identifizierungsinformationen verwendet werden, um Verbindungsinformationen zwischen der Zugriffspunktvorrichtung und einer beliebigen zugehörigen Workstation-Vorrichtung anzuzeigen; und
Setzen, auf das Erfassen des Vorhandenseins von gecachten Downlink-Daten hin, der der Workstation-Vorrichtung entsprechenden AID-Identifizierungsinformationen auf "1", um die Workstation-Vorrichtung zu ermitteln, die auf den Empfang der Downlink-Daten wartet, und
Senden des Management-Frame an die Workstation-Vorrichtung.

5. Kommunikationsverfahren für ein drahtloses lokales Netz nach Anspruch 2, ferner umfassend:
Empfangen des von der Workstation-Vorrichtung gesendeten Request-Frame; und
Parsing des Request-Frame, um Identifizierungsinformationen zu erhalten, wobei die Identifizierungsinformationen verwendet werden, um die Workstation-Vorrichtung anzuweisen, das Empfangen eines Wake-up-Frame zu unterstützen.

6. Kommunikationsverfahren für ein drahtloses lokales Netz nach einem der Ansprüche 1 bis 5, wobei
der Request-Frame einen Sonden-Request-Frame und/oder einen Verbindungs-Request-Frame enthält,
wobei die Identifizierungsinformationen in dem Request-Frame in Form eines Informationselements geschrieben sind.

7. Kommunikationsverfahren für ein drahtloses lokales Netz nach einem der Ansprüche 1 bis 5, wobei
in dem Fall, in welchem die Identifizierungsinformationen ein Ein-Bit-Feld in dem Frame-Header des Request-Frame sind, dann, wenn das Ein-Bit-Feld "1" ist, die Identifizierungsinformationen verwendet werden, um die Workstation-Vorrichtung anzuweisen, die gecachten Downlink-Daten gemäß dem Wake-up-Frame zu empfangen und den TIM-Mechanismus auszuschalten, um die gecachten Downlink-Daten zu erhalten;
oder dann, wenn das Ein-Bit-Feld "0" ist, die Identifizierungsinformationen verwendet werden, um die Workstation-Vorrichtung anzuweisen, das Erhalten der gecachten Downlink-Daten entweder gemäß dem Wake-up-Frame oder dem TIM-Mechanismus zu unterstützen;
in dem Fall, in welchem die Identifizierungsinformationen ein Zwei-Bit-Feld in dem Frame-Header des Request-Frame sind, dann, wenn das Zwei-Bit-Feld "00" ist, die Identifizierungsinformationen verwendet werden, um die Workstation-Vorrichtung anzuweisen, die gecachten Downlink-Daten gemäß dem Wake-up-Frame zu empfangen und den TIM-Mechanismus auszuschalten, um die gecachten Downlink-Daten zu erhalten;
oder dann, wenn das Zwei-Bit-Feld "01" ist, die Identifizierungsinformationen verwendet werden, um die Workstation-Vorrichtung anzuweisen, die gecachten Downlink-Daten gemäß dem Wake-up-Frame in einer Kommunikationsperiode des ersten Typs zu erhalten und die gecachten Downlink-Daten gemäß dem TIM-Mechanismus in einer Kommunikationsperiode des zweiten Typs zu erhalten,
wobei der TIM-Mechanismus ein Kommunikationsmodus ist, in welchem die Zugriffspunktvorrichtung einen Beacon-Frame an die Workstation-Vorrichtung sendet, und der TIM-Mechanismus verwendet wird, um die Workstation-Vorrichtung anzuweisen, aus dem Ruhezustand in den aktiven Zustand einzutreten, und/oder um die Workstation-Vorrichtung anzuweisen, mit der Zugriffspunktvorrichtung zeitlich zu synchronisieren.

8. Kommunikationsvorrichtung (300) für ein drahtloses lokales Netz, anwendbar für eine Workstation-Vorrichtung, umfassend:
eine erste Erzeugungseinheit (302) zum Erzeugen eines Request-Frame, wobei der Request-Frame Identifizierungsinformationen umfasst und die Identifizierungsinformationen verwendet werden, um die Workstation-Vorrichtung anzuweisen, das Empfangen eines Wake-up-Frame zu unterstützen;
eine erste Sendeeinheit (304) zum Senden des Request-Frame, um eine Zugriffspunktvorrichtung anzuweisen, gecachte Downlink-Daten gemäß dem Wake-up-Frame zu empfangen;
eine Empfangseinheit zum Empfangen eines Management-Frame, in welchem Traffic Indication Map (TIM) Identifizierungsinformationen hinterlegt sind, wobei
der Management-Frame von der Zugriffspunktvorrichtung empfangen wird, die das Senden eines Wake-up-Frame unterstützt, um anzuzeigen, ob gecachte Downlink-Daten vorhanden sind,
wobei die TIM-Identifizierungsinformationen, die der Workstation-Vorrichtung entsprechen, die das Empfangen eines Wake-up-Frame unterstützt, auf "0" gesetzt sind oder an diesen keine Einstellung vorgenommen wird, und der Management-Frame ein Beacon-Frame ist.

9. Kommunikationsvorrichtung (400) für ein drahtloses lokales Netz, die für eine Zugriffspunktvorrichtung anwendbar ist, wobei die Kommunikationsvorrichtung (400) für ein drahtloses lokales Netz umfasst:
eine Empfangseinheit zum Empfangen eines Request-Frame, wobei der Request-Frame Identifizierungsinformationen umfasst und die Identifizierungsinformationen verwendet werden, eine Workstation-Vorrichtung anzuweisen, das Empfangen eines Wake-up-Frame zu unterstützen, um die Workstation-Vorrichtung anzuweisen, gecachte Downlink-Daten gemäß dem Wake-up-Frame zu erhalten;
eine zweite Erzeugungseinheit (402), die einen Management-Frame erzeugt, in welchem Traffic Indication Map (TIM) Identifizierungsinformationen hinterlegt sind; und
eine zweite Sendeeinheit (404) zum Senden des Management-Frame an die Workstation-Vorrichtung, die das Empfangen eines Wake-up-Frame unterstützt, um anzuzeigen, ob gecachte Downlink-Daten vorhanden sind,
wobei die TIM-Identifizierungsinformationen, die der Workstation-Vorrichtung entsprechen, die das Empfangen eines Wake-up-Frame unterstützt, auf "0" gesetzt sind oder an diesen keine Einstellung vorgenommen wird, und der Management-Frame ein Beacon-Frame ist.

10. Kommunikationsvorrichtung (400) für ein drahtloses lokales Netz nach Anspruch 9, ferner umfassend:
eine dritte Erzeugungseinheit (406) zum Erzeugen eines Wake-up-Frame auf das Erfassen der Anwesenheit von gecachten Downlink-Daten hin; und
eine dritte Sendeeinheit (408) zum Senden des Wake-up-Frame, um die Workstation-Vorrichtung im Ruhezustand anzuweisen, in den aktiven Zustand einzutreten und die gecachten Downlink-Daten gemäß dem Wake-up-Frame zu empfangen.

11. Kommunikationsvorrichtung (400) für ein drahtloses lokales Netz nach Anspruch 9, ferner umfassend:
eine Einstelleinheit (410) zum Einstellen von AID-Identifizierungsinformationen in dem Management-Frame, wobei die AID-Identifizierungsinformationen verwendet werden, um Verbindungsinformationen zwischen der Zugriffspunktvorrichtung und einer beliebigen zugehörigen Workstation-Vorrichtung anzuzeigen; und
wobei die Einstelleinheit (410) ferner dafür verwendet wird, auf die Erfassung der Anwesenheit von gecachten Downlink-Daten hin die der Workstation-Vorrichtung entsprechenden AID-Identifizierungsinformationen auf "1" zu setzen, um die Workstation-Vorrichtung zu ermitteln, die auf das Empfangen der Downlink-Daten wartet.

12. Kommunikationsvorrichtung (400) für ein drahtloses lokales Netz nach Anspruch 9, ferner umfassend:
eine Empfangseinheit (412) zum Empfangen des von der Workstation-Vorrichtung gesendeten Request-Frame; und
eine Parsing-Einheit (414) für das Parsing des Request-Frame, um Identifizierungsinformationen zu erhalten, wobei die Identifizierungsinformationen verwendet werden, um die Workstation-Vorrichtung anzuweisen, das Empfangen eines Wake-up-Frame zu unterstützen.

13. Kommunikationsvorrichtung (300, 400) für ein drahtloses lokales Netz nach einem der Ansprüche 8 bis 12, wobei
der Request-Frame einen Sonden-Request-Frame und/oder einen Verbindungs-Request-Frame enthält,
wobei die Identifizierungsinformationen in dem Request-Frame in Form eines Informationselements geschrieben sind.

14. Kommunikationsvorrichtung (300, 400) für ein drahtloses lokales Netz nach einem der Ansprüche 8 bis 12, wobei
in dem Fall, in welchem die Identifizierungsinformationen ein Ein-Bit-Feld in dem Frame-Header des Request-Frame sind, dann, wenn das Ein-Bit-Feld "1" sind, die Identifizierungsinformationen verwendet werden, um die Workstation-Vorrichtung anzuweisen, die gecachten Downlink-Daten gemäß dem Wake-up-Frame zu empfangen und den TIM-Mechanismus auszuschalten, um die gecachten Downlink-Daten zu erhalten;
oder dann, wenn das Ein-Bit-Feld "0" ist, die Identifizierungsinformationen verwendet werden, um die Workstation-Vorrichtung anzuweisen, das Erhalten der gecachten Downlink-Daten entweder gemäß dem Wake-up-Frame oder dem TIM-Mechanismus zu unterstützen;
in dem Fall, in welchem die Identifizierungsinformationen ein Zwei-Bit-Feld in dem Frame-Header des Request-Frame sind, dann, wenn das Zwei-Bit-Feld "00" ist, die Identifizierungsinformationen verwendet werden, um die Workstation-Vorrichtung anzuweisen, die gecachten Downlink-Daten gemäß dem Wake-up-Frame zu empfangen und den TIM-Mechanismus auszuschalten, um die gecachten Downlink-Daten zu erhalten;
oder dann, wenn das Zwei-Bit-Feld "01" ist, die Identifizierungsinformationen verwendet werden, um die Workstation-Vorrichtung anzuweisen, die gecachten Downlink-Daten gemäß dem Wake-up-Frame in einer Kommunikationsperiode des ersten Typs zu erhalten und die gecachten Downlink-Daten gemäß dem TIM-Mechanismus in einer Kommunikationsperiode des zweiten Typs zu erhalten,
wobei der TIM-Mechanismus ein Kommunikationsmechanismus ist, durch welchen die Zugriffspunktvorrichtung einen Beacon-Frame an die Workstation-Vorrichtung sendet, und der TIM-Mechanismus verwendet wird, um die Workstation-Vorrichtung anzuweisen, aus dem Ruhezustand in den aktiven Zustand einzutreten, und/oder um die Workstation-Vorrichtung anzuweisen, mit der Zugriffspunktvorrichtung zeitlich zu synchronisieren.

## Revendications

1. Procédé de communication pour un réseau local sans fil, applicable à un dispositif de poste de travail, comprenant :
la génération d'une trame de demande, la trame de demande comprenant des informations d'identification, et les informations d'identification étant utilisées pour donner l'instruction au dispositif de poste de travail de prendre en charge la réception d'une trame de réveil (S102) ;
l'envoi de la trame de demande afin d'ordonner à un dispositif de point d'accès d'obtenir des données de liaison descendante mises en cache conformément à la trame de réveil (S104), dans lequel le point d'accès prend en charge l'envoi d'une trame de réveil pour indiquer s'il existe des données de liaison descendante mises en cache ; et
la réception d'une trame de gestion dans laquelle des informations d'identification de carte d'indication de trafic, TIM, sont définies,
dans lequel les informations d'identification TIM correspondant au dispositif de poste de travail prenant en charge la réception d'une trame de réveil sont réglées à « 0 » ou aucun réglage n'est effectué à cet égard, et la trame de gestion est une trame de balise.

2. Procédé de communication pour un réseau local sans fil, applicable à un dispositif de point d'accès, dans lequel le procédé de communication pour un réseau local sans fil comprend :
la réception d'une trame de demande, la trame de demande comprenant des informations d'identification, et les informations d'identification étant utilisées pour donner l'instruction au dispositif de poste de travail de prendre en charge la réception d'une trame de réveil afin de donner l'instruction au dispositif de poste de travail d'obtenir des données de liaison descendante mises en cache conformément à la trame de réveil ;
la génération d'une trame de gestion dans laquelle des informations d'identification de carte d'indication de trafic, TIM, sont définies (S202) ; et
l'envoi de la trame de gestion à un dispositif de poste de travail prenant en charge la réception d'une trame de réveil pour indiquer s'il existe des données de liaison descendante mises en cache (S204),
dans lequel les informations d'identification TIM correspondant au dispositif de poste de travail prenant en charge la réception d'une trame de réveil sont réglées à « 0 » ou aucun réglage n'est effectué à cet égard, et la trame de gestion est une trame de balise.

3. Procédé de communication pour un réseau local sans fil selon la revendication 2, comprenant, en outre, : la génération d'une trame de réveil lors de la détection de la présence de données de liaison descendante mises en cache ; et l'envoi de la trame de réveil pour ordonner au dispositif de poste de travail dans l'état de veille de passer à l'état d'éveil et de recevoir les données de liaison descendante mises en cache conformément à la trame de réveil.

4. Procédé de communication pour un réseau local sans fil selon la revendication 2, comprenant, en outre, :
la définition des informations d'identification AID dans la trame de gestion, les informations d'identification AID étant utilisées pour indiquer des informations de connexion entre le dispositif de point d'accès et tout dispositif de poste de travail associé ; et
le réglage, lors de la détection de la présence de données de liaison descendante mises en cache, des informations d'identification AID correspondant au dispositif de poste de travail à « 1 » pour déterminer le dispositif de poste de travail qui attend de recevoir les données de liaison descendante, et
l'envoi de la trame de gestion au dispositif de poste de travail.

5. Procédé de communication pour un réseau local sans fil selon la revendication 2, comprenant, en outre, :
la réception de la trame de demande envoyée par le dispositif de poste de travail ; et
l'analyse de la trame de demande pour obtenir des informations d'identification, les informations d'identification étant utilisées pour donner l'instruction au dispositif de poste de travail de prendre en charge la réception d'une trame de réveil.

6. Procédé de communication pour un réseau local sans fil selon l'une quelconque des revendications 1 à 5, dans lequel,
la trame de demande comprend une trame de demande de sondage et / ou une trame de demande d'association,
les informations d'identification sont inscrites dans la trame de demande sous la forme d'un élément d'information.

7. Procédé de communication pour un réseau local sans fil selon l'une quelconque des revendications 1 à 5, dans lequel,
dans le cas où les informations d'identification sont un champ à un bit dans l'en-tête de trame de la trame de demande, lorsque le champ à un bit est « 1 », les informations d'identification sont utilisées pour donner l'instruction au dispositif de poste de travail de recevoir les données de liaison descendante mises en cache conformément à la trame de réveil, et désactiver le mécanisme TIM pour obtenir les données de liaison descendante mises en cache ;
ou lorsque le champ à un bit est « 0 », les informations d'identification sont utilisées pour donner l'instruction au dispositif de poste de travail de prendre en charge l'obtention des données de liaison descendante mises en cache conformément à la trame de réveil ou au mécanisme TIM ;
dans le cas où les informations d'identification sont un champ à deux bits dans l'en-tête de trame de la trame de demande, lorsque le champ à deux bits est « 00 », les informations d'identification sont utilisées pour donner l'instruction au dispositif de poste de travail de recevoir les données de liaison descendante mises en cache conformément à la trame de réveil, et désactiver le mécanisme TIM pour obtenir les données de liaison descendante mises en cache ;
ou lorsque le champ à deux bits est « 01 », les informations d'identification sont utilisées pour donner l'instruction au dispositif de poste de travail d'obtenir les données de liaison descendante mises en cache conformément à la trame de réveil dans une période de communication de premier type, et d'obtenir les données de liaison descendante mises en cache conformément au mécanisme TIM dans une période de communication de second type,
dans lequel le mécanisme TIM est un mode de communication dans lequel le dispositif de point d'accès diffuse une trame de balise au dispositif de poste de travail, et le mécanisme TIM est utilisé pour ordonner au dispositif de poste de travail de passer de l'état de veille à l'état d'éveil, et / ou pour ordonner au dispositif de poste de travail de se synchroniser dans le temps avec le dispositif de point d'accès.

8. Appareil de communication (300) pour un réseau local sans fil, applicable à un dispositif de poste de travail, comprenant :
une première unité de génération (302) pour générer une trame de demande, la trame de demande comprenant des informations d'identification, et les informations d'identification étant utilisées pour donner des instructions au dispositif de poste de travail pour qu'il prenne en charge la réception d'une trame de réveil ;
une première unité d'envoi (304) pour envoyer la trame de demande afin de donner des instructions à un dispositif de point d'accès pour obtenir des données de liaison descendante mises en cache conformément à la trame de réveil ;
une unité de réception pour recevoir une trame de gestion dans laquelle des informations d'identification de carte d'indication de trafic, TIM, sont définies, dans laquelle
la trame de gestion est reçue du dispositif de point d'accès prenant en charge l'envoi d'une trame de réveil pour indiquer s'il existe des données de liaison descendante mises en cache,
dans lequel les informations d'identification TIM correspondant au dispositif de poste de travail prenant en charge la réception d'une trame de réveil sont réglées à « 0 » ou aucun réglage n'est effectué à cet égard, et la trame de gestion est une trame de balise.

9. Appareil de communication (400) pour un réseau local sans fil, applicable à un dispositif de point d'accès, dans lequel l'appareil de communication (400) pour un réseau local sans fil comprend :
une unité de réception pour recevoir une trame de demande , la trame de demande comprenant des informations d'identification, et les informations d'identification étant utilisées pour donner l'instruction à un dispositif de poste de travail de prendre en charge la réception d'une trame de réveil afin de donner l'instruction au dispositif de poste de travail d'obtenir des données de liaison descendante mises en cache selon la trame de réveil ;
une deuxième unité de génération (402) pour générer une trame de gestion dans laquelle des informations d'identification de carte d'indication de trafic, TIM, sont définies ; et
une deuxième unité d'envoi (404) pour envoyer la trame de gestion au dispositif de poste de travail prenant en charge la réception d'une trame de réveil pour indiquer s'il existe des données de liaison descendante mises en cache,
dans lequel les informations d'identification TIM correspondant au dispositif de poste de travail prenant en charge la réception d'une trame de réveil sont réglées à « 0 » ou aucun réglage n'est effectué à cet égard, et la trame de gestion est une trame de balise.

10. Appareil de communication (400) pour un réseau local sans fil selon la revendication 9, comprenant, en outre, :
une troisième unité de génération (406) pour générer une trame de réveil lors de la détection de la présence de données de liaison descendante mises en cache ; et
une troisième unité d'envoi (408) pour envoyer la trame de réveil afin d'ordonner au dispositif de poste de travail à l'état de veille de passer à l'état d'éveil et de recevoir les données de liaison descendante mises en cache conformément à la trame de réveil.

11. Appareil de communication (400) pour un réseau local sans fil selon la revendication 9, comprenant, en outre, :
une unité de réglage (410) pour régler des informations d'identification AID dans la trame de gestion, les informations d'identification AID étant utilisées pour indiquer des informations de connexion entre le dispositif de point d'accès et tout dispositif de poste de travail associé ; et
l'unité de réglage (410) étant en outre utilisée pour régler, lors de la détection de la présence de données de liaison descendante mises en cache, les informations d'identification AID correspondant au dispositif de poste de travail à « 1 » pour déterminer le dispositif de poste de travail qui attend de recevoir les données de liaison descendante.

12. Appareil de communication (400) pour un réseau local sans fil selon la revendication 9, comprenant, en outre, :
une unité de réception (412) pour recevoir la trame de demande envoyée par le dispositif de poste de travail ; et
une unité d'analyse syntaxique (414) pour analyser la trame de demande afin d'obtenir des informations d'identification, les informations d'identification étant utilisées pour ordonner au dispositif de poste de travail de prendre en charge la réception d'une trame de réveil.

13. Appareil de communication (300, 400) pour un réseau local sans fil selon l'une quelconque des revendications 8 à 12, dans lequel,
la trame de demande comprend une trame de demande de sondage et / ou une trame de demande d'association,
les informations d'identification sont inscrites dans la trame de demande sous la forme d'un élément d'information.

14. Appareil de communication (300, 400) pour un réseau local sans fil selon l'une quelconque des revendications 8 à 12, dans lequel,
dans le cas où les informations d'identification sont un champ à un bit dans l'en-tête de trame de la trame de demande, lorsque le champ à un bit est « 1 », les informations d'identification sont utilisées pour donner l'instruction au dispositif de poste de travail de recevoir les données de liaison descendante mises en cache conformément à la trame de réveil, et désactiver le mécanisme TIM pour obtenir les données de liaison descendante mises en cache ;
ou lorsque le champ à un bit est « 0 », les informations d'identification sont utilisées pour donner l'instruction au dispositif de poste de travail de prendre en charge l'obtention des données de liaison descendante mises en cache conformément à la trame de réveil ou au mécanisme TIM ;
dans le cas où les informations d'identification sont un champ à deux bits dans l'en-tête de trame de la trame de demande, lorsque le champ à deux bits est « 00 », les informations d'identification sont utilisées pour donner l'instruction au dispositif de poste de travail de recevoir les données de liaison descendante mises en cache conformément à la trame de réveil, et désactiver le mécanisme TIM pour obtenir les données de liaison descendante mises en cache ;
ou lorsque le champ à deux bits est « 01 », les informations d'identification sont utilisées pour donner l'instruction au dispositif de poste de travail d'obtenir les données de liaison descendante mises en cache conformément à la trame de réveil dans une période de communication de premier type, et d'obtenir les données de liaison descendante mises en cache conformément au mécanisme TIM dans une période de communication de second type,
dans lequel le mécanisme TIM est un mécanisme de communication par lequel le dispositif de point d'accès diffuse une trame de balise au dispositif de poste de travail, et le mécanisme TIM est utilisé pour ordonner au dispositif de poste de travail de passer de l'état de veille à l'état d'éveil, et / ou pour ordonner au dispositif de poste de travail de se synchroniser dans le temps avec le dispositif de point d'accès.
